# DEMANDE DE BREVET EUROPEEN

(11) **EP 0 554 171 A1**
(43) Date de publication de la demande: **04.08.1993**
(21) Numéro de dépôt: 93400200.7
(22) Date de dépôt: 27.01.1993
(51) Int. Cl.: H02K 5/14, H01R 39/40, H02K 11/00

(54) **Porte-balais pour moteur électrique à collecteur tournant**

(30) Priorité: 31.01.1992 FR 9201109
(71) Demandeur: VALEO THERMIQUE HABITACLE, 78320 Le Mesnil-Saint-Denis (FR)
(72) Inventeur: Lekmine, Djamel, F-91940 Les Ulis (FR)
(74) Mandataire: Colas, Jean-Pierre

(57) **Abrégé**

L'invention concerne un porte-balais pour un moteur électrique à collecteur tournant.

Le porte-balais comporte une plaque support (10) munie de deux faces opposées (12,14), d'une ouverture (16) pour le passage d'un collecteur tournant autour d'un axe de rotation et de deux guides (20,22) propres à recevoir respectivement deux balais (B1,B2) montés à coulissement dans des directions générales parallèles entre elles et non radiales par rapport à l'axe de rotation du collecteur, la plaque support étant réalisée pour former un plan de symétrie et chacun des deux guides étant réalisé symétrique par rapport à ce plan de manière à faire saillie sur chacune des deux faces de la plaque support, la direction générale de coulissement du balai correspondant étant contenue dans le plan de symétrie.

La plaque support peut être utilisée pour des moteurs électriques dont le collecteur tourne, soit en sens horaire, soit en sens anti-horaire.

## Description

L'invention concerne un porte-balais pour un moteur électrique à collecteur tournant.

On connaît déjà, en particulier d'après le document FR-A-2 454 202, un porte-balais du type comprenant une plaque support munie de deux faces opposées, d'une ouverture pour le passage d'un collecteur tournant autour d'un axe de rotation, et de deux guides propres à recevoir respectivement deux balais montés à coulissement dans des directions générales parallèles entre elles et non radiales par rapport à l'axe de rotation du collecteur.

Dans les porte-balais connus du type précité, les deux guides sont disposés tous deux sur une même face de la plaque support. Comme ces guides sont prévus pour que les balais correspondants coulissent dans des directions non radiales par rapport à l'axe de rotation du collecteur, il en résulte que cette plaque support ne peut convenir que pour un moteur électrique dont le collecteur -et par conséquent le rotor qui le porte- tournent dans un sens de rotation déterminé, c'est-à-dire soit dans le sens horaire, soit dans le sens anti-horaire.

Par conséquent, si l'on veut construire un moteur dont le rotor tourne en sens de rotation opposé, il faut prévoir une autre plaque support.

L'invention a pour but de surmonter cet inconvénient en procurant un porte-balais du type défini en introduction et pouvant équiper un moteur dont le collecteur tourne aussi bien dans le sens horaire que dans le sens anti-horaire.

Ainsi, à partir des mêmes pièces de base, il est possible de construire deux types de moteurs qui diffèrent simplement par leurs sens de rotation.

Cette caractéristique est particulièrement avantageuse, notamment dans la construction de petits moteurs électriques alimentés en courant continu et destinés à l'équipement des véhicules automobiles.

L'invention propose à cet effet un porte-balais du type défini en introduction, dans lequel la plaque support est réalisée de manière à former un plan de symétrie et dans lequel chacun des deux guides est réalisé symétrique par rapport à ce plan de manière à faire saillie sur chacune des deux faces de la plaque support, la direction générale de coulissement du balai correspondant étant contenue dans ce plan de symétrie.

Du fait que la plaque support et les deux guides possèdent une structure symétrique par rapport à un plan, il est possible d'utiliser le même porte-balais, quel que soit le sens de rotation du moteur. En effet, le même porte-balais peut être utilisé dans deux positions différentes par simple retournement de la plaque support à 180°.

Dans une forme de réalisation préférée de l'invention, les deux guides sont constitués respectivement de deux tubes formés d'une seule pièce avec la plaque support par moulage d'une matière électriquement isolante, chaque tube présentant une section transversale définissant deux moitiés s'étendant respectivement de part et d'autre du plan de symétrie. Chacun des guides est avantageusement formé d'un tube de section transversale rectangulaire.

Selon une autre caractéristique de l'invention, le porte-balais comporte des moyens de réception pour loger des moyens d'antiparasitage.

Dans une forme de réalisation préférée de l'invention, ces moyens de réception comportent un logement ménagé dans l'épaisseur de la plaque support et propre à recevoir un condensateur.

Avantageusement, les moyens de réception précités comportent aussi deux logements ménagés dans la plaque support et propres à recevoir respectivement deux inductances.

L'invention prévoit aussi que le porte-balais comporte en outre des moyens de réception pour loger un thermocontact.

Selon encore une autre caractéristique de l'invention, le porte-balais comprend des fiches de connexion électriques et des liaisons électriques portées par la plaque support.

Dans la description qui suit, faite seulement à titre d'exemple, on se réfère au dessin annexé, sur lequel :
- la figure 1 est une vue de dessus montrant l'une des faces d'une plaque support selon l'invention;
- la figure 2 est une vue en coupe suivant la ligne II-II de la figure 1;
- la figure 3 est une vue en perspective d'un porte-balais comportant une plaque support selon les figures 1 et 2 ainsi que des balais, des moyens d'antiparasitage et un thermocontact;
- la figure 4 est une vue schématique analogue à la figure 1, montrant la position du porte-balais dans le cas où le collecteur tourne dans le sens horaire; et
- la figure 5 est une vue analogue à celle de la figure 4 montrant la position du porte-balais dans le cas où le collecteur tourne en sens anti-horaire.

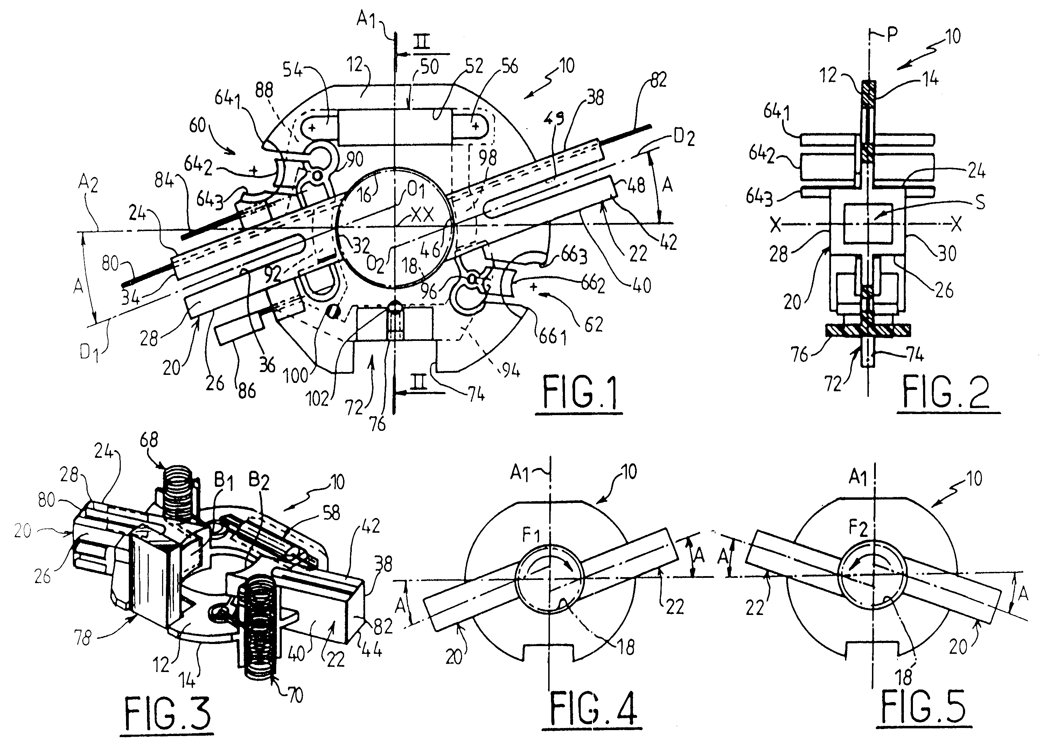

On se réfère tout d'abord aux figures 1 et 2 qui montrent une plaque support 10 de forme générale annulaire, munie de deux faces parallèles et opposées 12 et 14 et d'une ouverture circulaire 16 centrée autour d'un axe XX. L'ouverture 16 est destinée au passage d'un collecteur 18 (représenté en trait interrompu sur la figure 1) solidaire en rotation du rotor d'un moteur, qui est monté à rotation autour de l'axe XX.

La plaque support 10 est réalisée de manière à former un plan de symétrie P (figure 2) situé à mi-distance entre les deux faces opposées 12 et 14.

La plaque support 10 comporte deux guides 20 et 22 qui sont formés d'une seule pièce avec elle par moulage d'une matière plastique électriquement isolante. Les guides 20 et 22 sont constitués respectivement de deux tubes présentant chacun une section transversale S de forme générale rectangulaire définissant deux moitiés s'étendant respectivement de part et d'autre du plan de symétrie P (figure 2).

Le guide 20 est défini par deux parois opposées 24 et 26 qui s'étendent perpendiculairement au plan P et par deux autres parois opposées 28 et 30 qui s'étendent parallèlement au plan P. Le guide 20 comporte une première extrémité ouverte 32 débouchant du côté de l'ouverture 16 de la plaque support 10 et une extrémité ouverte opposée 34. Par ailleurs, la face 28 comporte une fente longitudinale 36 qui débouche sur l'extrémité 34.

De façon correspondante, le guide 22 est défini par deux parois opposées 38 et 40 perpendiculaires au plan P et par deux faces opposées 42 et 44 parallèles au plan P. Le guide 22 possède une extrémité ouverte 46 débouchant du côté de l'ouverture 16 et une extrémité ouverte opposée 48. La face 42 comporte une fente longitudinale 49 qui débouche sur l'extrémité 34.

Les guides 20 et 22 sont destinés respectivement à recevoir à coulissement deux balais B1 et B2 (dont un seul est visible sur la figure 3) propres à frotter contre le collecteur 18 dans deux régions diamétralement opposées de celui-ci.

Les guides 20 et 22 définissent deux directions générales de coulissement D1 et D2 respectivement pour les balais B1 et B2, ces directions générales D1 et D2 étant parallèles entre elles et non radiales par rapport à l'axe de rotation XX (figure 1).

Comme le montre la figure 1, les directions D1 et D2 coupent respectivement en O₁ et O₂ un axe A1 contenu dans le plan P et perpendiculaire à l'axe XX. L'axe A1 est perpendiculaire à un axe A2 qui est contenu dans le plan P, s'étend perpendiculairement à l'axe XX et passe sensiblement au centre des extrémités respectives 32 et 46 des guides 20 et 22.

Dans l'exemple, les directions D1 et D2 forment chacune un angle A d'environ 20° par rapport à cet axe A2. Du fait que les balais B1 et B2 coulissent dans des directions générales D1 et D2 non radiales par rapport à l'axe de rotation XX du collecteur, on évite de générer des résonances désagréables.

Conformément à l'invention, la plaque support 10 comprend en outre des moyens de réception pour loger des moyens d'antiparasitage.

Ces moyens de réception comprennent un logement 50 ménagé dans l'épaisseur de la plaque support 10 et comportant une ouverture centrale 52 de forme générale rectangulaire dont les grands côtés sont parallèles à l'axe A2. Cette ouverture 52 se prolonge par deux bords d'appui opposés 54 et 56 disposés symétriquement par rapport à l'axe A1. Le logement 50 est destiné à recevoir un condensateur 58 (figure 3).

La plaque support 10 comporte en outre deux logements 60 et 62 disposés de façon diamétralement opposée par rapport à l'axe XX. Le logement 60 est délimité par trois barrettes supports 64₁, 64₂, 64₃ qui s'étendent symétriquement de part et d'autre du plan de symétrie P et perpendiculairement à celui-ci pour constituer une enveloppe de forme sensiblement semi-cylindrique.

De même, le logement 62 est délimité par trois barrettes supports 66₁, 66₂ et 66₃ s'étendant symétriquement de part et d'autre du plan de symétrie P et perpendiculairement à celui-ci.

Les logements 60 et 62 sont destinés à recevoir respectivement deux inductances 68 et 70 (figure 3) faisant saillie symétriquement de part et d'autre du plan P.

La plaque support 10 comprend par ailleurs un logement 72 pour loger un thermocontact. Ce logement 72 est situé dans une région diamétralement opposée par rapport au logement 50 et il est constitué d'une encoche 74 ménagée dans l'épaisseur de la plaque support 10. Les moyens de réception 72 comportent en outre une barrette d'appui 76 (figures 1 et 2) s'étendant symétriquement de part et d'autre du plan de symétrie P.

L'encoche 74 en coopération avec la barrette 76 permet de recevoir un thermocontact 78 (figure 3) destiné à interrompre le fonctionnement du moteur en cas de surchauffe.

A l'intérieur des guides 20 et 22 sont prévues respectivement deux languettes 80 et 82 dépassant des extrémités respectives 34 et 48. Les extrémités dépassantes peuvent être repliées à 90° (figure 3) pour empêcher que les balais correspondants B1 et B2 ne puissent s'échapper des guides 20 et 22.

La plaque support 10 comporte en outre des moyens pour assurer l'alimentation électrique des balais, des moyens d'antiparasitage et du thermocontact.

Ces moyens de connexion comprennent deux broches 84 et 86 disposées de part et d'autre du guide 20 et propres à être reliées aux bornes positive et négative d'une source de tension continue.

La broche 84 alimente, par une liaison électrique 88, à la fois le condensateur 58 devant être placé dans le logement 50 et une connexion 90 destinée à alimenter l'inductance 68. Cette dernière est destinée à alimenter le balai B1 par un contact 92.

La broche 86 alimente, par une liaison électrique 94, à la fois le condensateur 58 et une connexion 96. Cette dernière est destinée à être reliée à l'inductance 70 qui elle-même alimente un contact 98 pour le balai B2.

Deux connexions 100 et 102 sont par ailleurs interposées sur la liaison 94 pour permettre d'alimenter le thermocontact 78.

Dans la position de la figure 1, qui est schématisée sur la figure 4, le porte-balais est destiné à alimenter électriquement un collecteur 18 tournant dans le sens horaire comme montré par la flèche F1.

En retournant le porte-balais, par rotation de 180° autour de l'axe A1, il peut être utilisé pour l'alimentation du collecteur d'un moteur tournant dans le sens anti-horaire comme représenté par la flèche F2 sur la figure 5.

Le porte-balais de l'invention trouve une application particulière dans les moteurs électriques destinés aux équipements de véhicules automobiles, par exemple aux moteurs d'entraînement de ventilateurs pour installations de chauffage-ventilation.

## Revendications

**1.-** Porte-balais pour moteur électrique, comportant une plaque support (10) munie de deux faces opposées (12,14), d'une ouverture (16) pour le passage d'un collecteur (18) tournant autour d'un axe de rotation (XX), et de deux guides (20,22) propres à recevoir respectivement deux balais (B1,B2) montés à coulissement dans des directions générales (D1,D2) parallèles entre elles et non radiales par rapport à l'axe de rotation (XX) du collecteur (18), caractérisé en ce que la plaque support (10) est réalisée pour former un plan de symétrie (P) et en ce que chacun des deux guides (20,22) est réalisé symétrique par rapport à ce plan (P) de manière à faire saillie sur chacune des deux faces (12,14) de la plaque support, la direction générale de coulissement (D1,D2) du balai correspondant étant contenue dans le plan de symétrie (P).

**2.-** Porte-balais selon la revendication 1, caractérisé en ce que les deux guides (20,22) sont constitués respectivement de deux tubes formés d'une seule pièce avec la plaque support par moulage d'une matière électriquement isolante, chaque tube (20,22) présentant une section transversale (S) définissant deux moitiés s'étendant respectivement de part et d'autre du plan de symétrie (P).

**3.-** Porte-balais selon la revendication 2, caractérisé en ce que chacun des guides (20,22) est formé d'un tube de section transversale rectangulaire.

**4.-** Porte-balais selon l'une des revendications 1 à 3, caractérisé en ce que la plaque support (10) comporte des moyens de réception (50,60,62) pour loger des moyens d'antiparasitage.

**5.-** Porte-balais selon la revendication 4, caractérisé en ce que lesdits moyens de réception comportent un logement (50) ménagé dans l'épaisseur de la plaque support (10) et propre à recevoir un condensateur (58).

**6.-** Porte-balais selon la revendication 4, caractérisé en ce que lesdits moyens de réception comportent deux logements (60,62) ménagés dans la plaque support (10) et propres à recevoir respectivement deux inductances (68,70).

**7.-** Porte-balais selon la revendication 6, caractérisé en ce que chaque logement (60;62) est délimité par des barrettes supports (64₁,64₂,64₃;66₁,66₂,66₃) s'étendant symétriquement de part et d'autre du plan (P) et perpendiculairement à celui-ci pour constituer une enveloppe de forme sensiblement semi-cylindrique.

**8.-** Porte-balais selon l'une des revendications 1 à 7, caractérisé en ce qu'il comprend en outre des moyens de réception (72) pour loger un thermocontact (78).

**9.-** Porte-balais selon la revendication 8, caractérisé en ce que lesdits moyens de réception (72) comportent une encoche (74) ménagée dans l'épaisseur de la plaque support (10) et une barrette d'appui (76) s'étendant de part et d'autre du plan de symétrie (P) et perpendiculairement à celui-ci.

**10.-** Porte-balais selon l'une des revendications 1 à 9, caractérisé en ce qu'il comprend en outre deux fiches de connexion électriques (84,86) et des liaisons électriques (88,94) portées par la plaque support.
